# EUROPEAN PATENT APPLICATION

(11) **EP 2 299 629 A1**
(43) Date of publication of application: **23.03.2011**
(21) Application number: 09806317.5
(22) Date of filing: 29.04.2009
(51) Int. Cl.: H04L 12/24

(54) **A METHOD AND DEVICE FOR ADJUSTING THE SIGNAL RATE**

(30) Priority: 13.08.2008 CN 200810142470
(71) Applicant: Huawei Technologies Co., Ltd., Longgang District, Shenzhen Guangdong 518129 (CN)
(72) Inventor: LIN, Yangbo, Shenzhen 518129 (CN)
(74) Representative: Kreuz, Georg Maria
(86) International application number: PCT/CN2009/071545
(87) International publication number: WO 2010/017714

(57) **Abstract**

A method for adjusting a signal rate is disclosed. The method includes: a Media Gateway (MG) receives information indicative of a signal to be adjusted and information about an adjustment delta of the rate; the MG calculates a target rate according to a current execution rate of the signal to be adjusted and the information about the adjustment delta of the rate; and the MG executes the signal to be adjusted at the target rate. A Media Gateway Controller (MGC) and an MG are also disclosed. Through the embodiments of the present invention, the MGC can instruct the MG to adjust the rate without knowing the conventional rate of the signal, and the MG may also calculate the target rate directly based on the current rate instead of the conventional rate.

## Description

This application claims priority to Chinese Patent Application No. 200810142470.6, filed with the Chinese Patent Office on August 13, 2008, which is hereby incorporated by reference in its entirety.

### FIELD OF THE INVENTION

The present invention relates to the field of communication technologies, and in particular, to a method and an apparatus for adjusting signal rates.

### BACKGROUND

In the existing packet-based networks, a Media Gateway Controller (MGC) and a Media Gateway (MG) are two essential components of an architecture where the service function is separated from the bearing function. The MGC is responsible for service control and the MG is responsible for media bearing. In this way, the service control plane is separated from the media bearer plane, network resources are shared sufficiently, device upgrade and service extension are simplified, and the costs of development and maintenance are slashed.

A (media) gateway control protocol is applied to communication between the MG and the MGC. Currently, two commonly used gateway control protocols are the H.248/MeGaCo and the Media Gateway Control Protocol (MGCP), and the H.248/MeGaCo is an evolved version of the MGCP.

Taking the H.248 protocol as an example, the following abstract connection model exists according to this protocol: Various resources on the MG are abstracted as terminations. The terminations are categorized into physical termination and ephemeral termination. A physical termination represents a physical entity of a semi-permanent existence nature, for example, Time Division Multiplex (TDM) timeslots; and an ephemeral termination represents a public resource requested temporarily and released immediately after being used, for example, Real-Time Transport Protocol (RTP) streams. Besides, a special termination called "root termination" represents the entirety of the MG. The correlation between terminations is abstracted as context. A context represents correlation between multiple terminations, and therefore, the interrelations between terminations may be expressed by topology. A termination which has not been correlated with any other terminations may be incorporated by a special context called "null".

In the prior art, signals are used by the MGC for instructing the MG to perform a certain resource operation such as playing tones. Signals are executed on the termination level or the stream level. When a signal is executed on the termination, it indicates that the signal is applicable to all streams on the termination simultaneously. A signal list may be used to represent a series of operations to be performed sequentially, and intervals may exist between the operations. The MGC delivers a signal descriptor to the MG, and the signal descriptor carries signals and/or a signal list. The signals or the signal list carried in signal descriptor delivered at the same time are executed synchronously.

Signals are executed at a specific rate. In practice, the rate needs to be adjusted. In the prior art, a conventional value may be preset as a benchmark value and the rate of executing signals is adjusted according to the benchmark value.

In the process of practicing the prior art, the inventor of the present invention finds at least these problems in the prior art: The mode of adjusting the rate of executing signals depends on the conventional value which acts as the benchmark value; if the MG does not know the conventional value, the adjustment becomes impossible. Consequently, the flexibility and the efficiency of the adjustment are deteriorated.

### SUMMARY OF THE INVENTION

The present invention provides a method and an apparatus for adjusting signal rates to improve flexibility and efficiency of adjusting signal rates.

The present invention provides the following technical solutions:
According to the first aspect of the present invention a method for adjusting signal rates includes:
   receiving, by an MG, information indicative of a signal to be adjusted and information about an adjustment delta of a rate;
   calculating, by the MG, a target rate according to a current execution rate of the signal to be adjusted and the information about the adjustment delta of the rate; and
   executing, by the MG, the signal to be adjusted at the target rate.
According to the second aspect of the present invention a media gateway (MG) includes:
   a receiving unit, configured to receive information indicative of a signal to be adjusted and information about an adjustment delta of a rate;
   a calculating unit, configured to calculate a target rate according to a current execution rate of the signal to be adjusted and the information about the adjustment delta of the rate; and
   an adjusting unit, configured to execute the indicated signal to be adjusted at the target rate.
According to the third aspect of the present invention a media gateway controller (MGC) includes:
   a sending unit, configured to send information indicative of a signal to be adjusted and information about an adjustment delta of a rate to an MG.

The MG calculates a target rate according to a current execution rate of the signal to be adjusted and the information about the adjustment delta of the rate, and executes the signal to be adjusted at the target rate.

In the present invention, the MGC may instruct the MG to adjust the rate of a specific signal being executed without knowing the conventional rate of the signal, and the MG may also calculate the target rate directly based on the current rate instead of the conventional rate, thus improving flexibility and efficiency of adjusting signal rates.

### BRIEF DESCRIPTION OF THE DRAWINGS

To make the technical solution of the present invention clearer, the accompanying drawings for illustrating the embodiments of the present invention are outlined below. Apparently, the accompanying drawings are for the exemplary purpose only, and person having ordinary skill in the art can derive other drawings from such accompanying drawings without any creative effort.
FIG. 1 is a flowchart of a method for adjusting signal rates according to a first embodiment of the present invention;
FIG. 2 is a flowchart of a method for adjusting signal rates according to a second embodiment of the present invention; and
FIG. 3 shows a structure of an MG according to an embodiment of the present invention.

### DETAILED DESCRIPTION OF THE EMBODIMENTS

In the embodiments of the present invention, a (media) gateway control protocol such as the H.248 and the MGCP between the MG and the MGC is extended so that the MGC instructs the MG to adjust the signal rate more conveniently and efficiently. The detailed steps are as follows:
the MG receives information indicative of a signal to be adjusted and the information about the adjustment delta of the rate from the MGC;
the MG calculates a target rate according to a current execution rate of the signal to be adjusted and the information about the adjustment delta of the rate; and
the MG executes the signal to be adjusted at the target rate.

The embodiments of the present invention are elaborated below with reference to accompanying drawings.

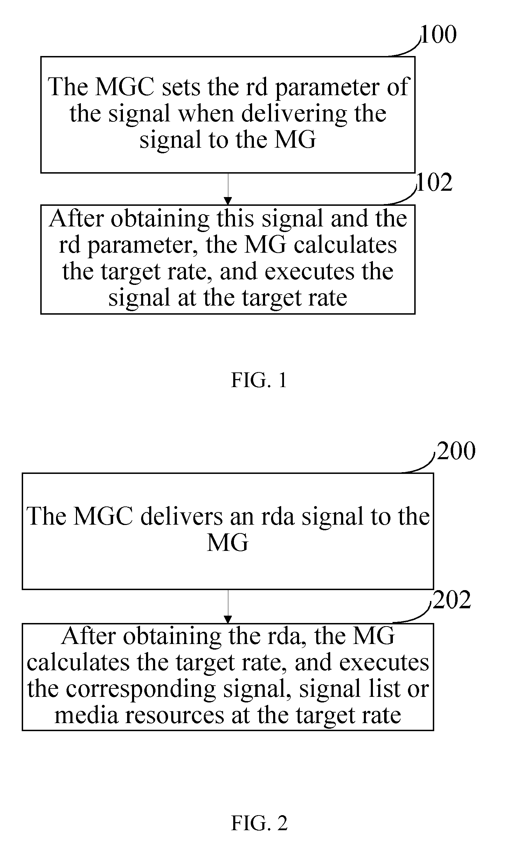

FIG. 1 is a flowchart of a method for adjusting signal rates according to a first embodiment of the present invention.

In this embodiment, a parameter in the signal (such as Play, PlayCollect, and PlayRecord) represents the delta of the current rate relative to the target rate. For example, the parameter is named as "Rate Delta" parameter, which is abbreviated as "rd". This parameter is an integer, and is measured in a percent. A positive value of this parameter indicates a percentage by which the target rate is higher than the current rate; a negative value of this parameter indicates a percentage by which the target rate is lower than the current rate; and "0" means that the target rate is the same as the current rate. The default value is "0".

The method according to this embodiment includes the following steps:
Step 100: When the MGC delivers a signal to an MG, the MGC may set the rd parameter of the signal. This parameter serves as an indication of adjusting the rate of the signal. The value of the rd parameter is a delta of the current rate relative to the target rate.
Step 102: After obtaining this signal and the rd parameter, the MG calculates the target rate according to the signal, the rd parameter, and the current execution rate of the signal; and executes the signal at the target rate. For example, supposing that the current rate is double of the conventional rate, if rd = 50, the target rate is three times as high as the conventional rate; if rd = -50, the target rate is equal to the conventional rate; if rd = 0, the target rate is still double of the conventional rate.

In this embodiment, the signal sent by the MG is information indicative of a signal to be adjusted, and the rate delta parameter carried in the signal is the information about the adjustment delta of the rate.

In this embodiment, when the MGC delivers the signal to the MG for executing, the MGC may instruct the MG to adjust the rate without knowing the conventional rate of the signal, and the MG may also calculate the target rate directly based on the current rate instead of the conventional rate.

FIG. 2 is a flowchart of a method for adjusting signal rates according to a second embodiment of the present invention.

In this embodiment, the second signal indicates adjustment of the rate delta of the specific signal. For example, the signal is named as Rate Delta Adjustment ("rda"). This signal may further include the following parameters:
adjustment object: an adjustment object may be a signal identifier ("si"), a Signal List Identifier ("sli"), a Media Resource Identifier ("mri"), or any combination thereof, which are all string types; and
adjustment delta: for example, the adjustment delta is named as "Delta", which is identified as "delta", and represents the delta of the current rate. This parameter is an integer, and is measured in a percent. A positive value of this parameter indicates a percentage by which the target rate is higher than the current rate; a negative value of this parameter indicates a percentage by which the target rate is lower than the current rate; and "0" means that the target rate is the same as the current rate. The default value is "0".

The method according to this embodiment includes the following steps:
Step 200: When the MGC needs to instruct the MG to adjust the specific signal, a signal list, or the rate of a media resource, the MGC may deliver the foregoing rda signal to the MG, and set si, sli, or mri, or any combination thereof, and set the delta of the signal as an delta of the current rate relative to the target rate.
Step 202: After the MG receives the signal and its parameters, the MG calculates out the target rate of the signal, and applies the target rate to the corresponding signal, signal list or media resource.

For example, supposing that the current rate of the signal "play" is double of the conventional rate, if the MGC delivers a signal "rda" and its parameters are si="play" and delta=50, the target rate of the "play" signal is three times as high as the conventional rate; if the MGC delivers a signal "rda" and its parameters are si="play" and delta=-50, the target rate of the "play" signal is equal to the conventional rate; if the MGC delivers a signal "rda" and its parameters are si="play" and delta=0, the target rate of the "play" signal is still double of the conventional rate. If sil="play, playcollect, playrecord" replaces the foregoing si="play", delta=50 indicates increasing the current rate of the "play" signal, the "playcollect" signal, and the "playrecord" signal in the signal list by 50% respectively. If mri="a.rm" replaces the foregoing si="play", delta=-50 indicates decreasing the current rate of every signal related to the "a.rm" medium and/or every signal in the signal list by 50% respectively.

In this embodiment, the adjustment object parameter is information indicative of the signal to be adjusted, and the rate delta parameter is the information about adjustment delta of the rate.

In this embodiment, the MGC may instruct the MG to adjust the rate of a specific signal being executed without knowing the conventional rate of the signal, and the MG may also calculate the target rate directly based on the current rate instead of the conventional rate, thus improving flexibility and efficiency of adjusting signal rates.

It should be noted that, as an example in this embodiment, the information about the adjustment delta of the rate is a percent by which the target rate is higher than or lower than the current execution rate of the signal. In practice, however, the information about the adjustment delta of the rate may also be an absolute value by which the target rate is higher than or lower than the current execution rate of the signal.

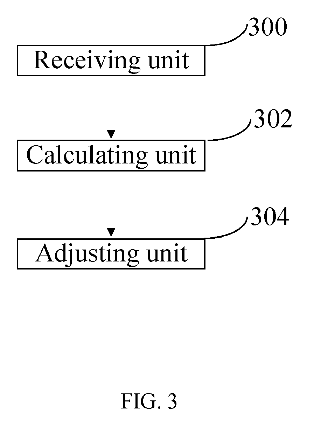

An MG is also provided in an embodiment of the present invention. As shown in FIG. 3, the MG includes:
a receiving unit 300, configured to receive information indicative of the signal to be adjusted and information about an adjustment delta of a rate from the MGC;
a calculating unit 302, configured to calculate a target rate according to a current execution rate of the signal to be adjusted and the information about the adjustment delta of the rate; and
an adjusting unit 304, configured to execute the indicated signal to be adjusted at the target rate.

Specifically, the receiving unit may be a first receiving unit, which is configured to receive the signal sent by the MGC, where the signal carries a rate delta parameter, the signal is the information indicative of the signal to be adjusted, and the rate delta parameter is the information about the adjustment delta of the rate.

Besides, the receiving unit may also be a second receiving unit, which is configured to receive the rate delta adjustment signal sent by the MGC, where the rate delta adjustment signal carries an adjustment object parameter and a rate delta parameter, the adjustment object parameter is the information indicative of the signal to be adjusted, and the rate delta parameter is the information about the adjustment delta of the rate. The information indicative of the signal to be adjusted carries a signal identifier, a signal list, or a media resource identifier, or any combination thereof.

The information about the adjustment delta of the rate is a percent by which the target rate is higher or lower than the current execution rate of the signal, or is an absolute value by which the target rate is higher or lower than the current execution rate of the signal.

Through the MG provided in this embodiment, when the MGC delivers a signal to the MG for executing, the MGC may instruct the MG to adjust the rate of the signal without knowing the conventional rate of the signal, and the MG may also calculate the target rate directly based on the current rate instead of the conventional rate, thus improving flexibility and efficiency of adjusting signal rates.

An MGC is provided in an embodiment of the present invention. The MGC includes:
a sending unit, configured to send information indicative of a signal to be adjusted and information about an adjustment delta of a rate to an MG.

The MG calculates a target rate according to a current execution rate of the signal to be adjusted and the information about the adjustment delta of the rate; and executes the signal to be adjusted at the target rate.

Specifically, the sending unit may be a first sending unit, which is configured to send a signal to the MG, where the signal carries a rate delta parameter, the signal is the information indicative of the signal to be adjusted, and the rate delta parameter is the information about the adjustment delta of the rate.

Besides, the sending unit may also be a second sending unit, which is configured to send a rate delta adjustment signal to the MG, where the rate delta adjustment signal carries an adjustment object parameter and a rate delta parameter, the adjustment object parameter is the information indicative of the signal to be adjusted, and the rate delta parameter is the information about the adjustment delta of the rate.

In this embodiment, the information indicative of the signal to be adjusted carries a signal identifier, or a signal list identifier, or a media resource identifier, or any combination thereof.

In this embodiment, the information about the adjustment delta of the rate is a percent by which the target rate is higher or lower than the current execution rate of the signal, or is an absolute value by which the target rate is higher or lower than the current execution rate of the signal.

Through the MGC provided in this embodiment, when the MGC delivers a signal to the MG for executing, the MGC may instruct the MG to adjust the rate of the signal without knowing the conventional rate of the signal, and the MG may also calculate the target rate directly based on the current rate instead of the conventional rate, thus improving flexibility and efficiency of adjusting signal rates.

After reading the foregoing embodiments, those skilled in the art are clearly aware that the present invention may be implemented through hardware, or through software in addition to a necessary universal hardware platform. The technical solution under the present invention may be embodied in a software product. The software product may be stored in a nonvolatile storage medium (such as CD-ROM, USB flash disk, or mobile hard disk), and may include several instructions that enable a computer device (such as personal computer, server, or network device) to perform the method specified in any embodiment of the present invention.

Besides, a data structure is provided in an embodiment of the present invention. The data structure is a signal that includes the information indicative of the signal to be adjusted and the information about the adjustment delta of the rate.

Specifically, the signal may be the information indicative of the signal to be adjusted, and the rate delta parameter carried in the signal is the information about the adjustment delta of the rate. A parameter in the signal (such as Play, PlayCollect, or PlayRecord) represents the delta of the current rate relative to the target rate. For example, the parameter is named as "Rate Delta", which is abbreviated as "rd". This parameter is an integer, and is measured in a percent. A positive value of this parameter indicates a percentage by which the target rate is higher than the current rate; a negative value of this parameter indicates a percentage by which the target rate is lower than the current rate; and "0" means that the target rate is the same as the current rate. The default value is "0".

This signal may also be a Rate Delta Adjustment (rda) signal, and may further include the following parameters:
adjustment object: an adjustment object may be a signal identifier ("si"), a Signal List Identifier ("sli"), a Media Resource Identifier ("mri"), or any combination thereof, which are all string types; and
adjustment delta: for example, the adjustment delta is named as "Delta", which is identified as "delta", and represents the delta of the current rate. This parameter is an integer, and is a percent. A positive value of this parameter indicates a percentage by which the target rate is higher than the current rate; a negative value of this parameter indicates a percentage by which the target rate is lower than the current rate; and "0" means that the target rate is the same as the current rate. The default value is "0". The adjustment object parameter is information indicative of the signal to be adjusted, and the rate delta parameter is the information about adjustment delta of the rate.

It should be noted that, the embodiments of the present invention are applicable to media resource servers in split architecture, namely, applicable to interaction between the media resource control device and the media resource processing device with respect to signal setting and adjustment. In this case, the media resource control device is equivalent to the MGC, and the media resource processing device is equivalent to the MG.

It should be noted that the above descriptions are merely some exemplary embodiments of the present invention, and those skilled in the art may make various improvements and refinements without departing from the spirit of the invention. All such modifications and refinements are intended to be covered by the present invention.

## Claims

1. A method for adjusting a signal rate, comprising:
receiving, by a Media Gateway (MG), information indicative of a signal to be adjusted and information about an adjustment delta of the rate;
calculating, by the MG, a target rate according to a current execution rate of the signal to be adjusted and the information about the adjustment delta of the rate; and
executing, by the MG, the signal to be adjusted at the target rate.

2. The method according to claim 1, wherein: the receiving of the information indicative of the signal to be adjusted and the information about the adjustment delta of the rate comprises:
receiving, by the MG, a signal sent by a Media Gateway Controller (MGC), wherein the signal carries a rate delta parameter; the signal is the information indicative of the signal to be adjusted, and the rate delta parameter is the information about adjustment delta of the rate.

3. The method according to claim 1, wherein: the receiving of the information indicative of the signal to be adjusted and the information about the adjustment delta of the rate comprises:
receiving, by the MG, a rate adjustment signal sent by a Media Gateway Controller (MGC), wherein the rate adjustment signal carries an adjustment object parameter and a rate delta parameter; the adjustment object parameter is the information indicative of the signal to be adjusted, and the rate delta parameter is the information about adjustment delta of the rate.

4. The method according to claim 3, wherein:
the information indicative of the signal to be adjusted carries at least a signal identifier, or a signal list identifier, or a media resource identifier, or any combination thereof.

5. The method according to any one of claims 1-4, wherein:
the information about the adjustment delta of the rate is a percent by which a target rate is higher or lower than a current execution rate of the signal; or
the information about the adjustment delta of the rate is an absolute value by which the target rate is higher or lower than the current execution rate of the signal.

6. A Media Gateway (MG), comprising:
a receiving unit, configured to receive information indicative of a signal to be adjusted and information about an adjustment delta of a rate;
a calculating unit, configured to calculate a target rate according to a current execution rate of the signal to be adjusted and the information about the adjustment delta of the rate; and
an adjusting unit, configured to execute the indicated signal to be adjusted at the target rate.

7. The MG according to claim 6, wherein:
the receiving unit is a first receiving unit, which is configured to receive a signal sent by a Media Gateway Controller (MGC), wherein the signal carries a rate delta parameter;
the signal is the information indicative of the signal to be adjusted, and the rate delta parameter is the information about adjustment delta of the rate.

8. The MG according to claim 6, wherein:
the receiving unit is a second receiving unit, which is configured to receive a rate adjustment signal sent by a Media Gateway Controller (MGC), wherein the rate adjustment signal carries an adjustment object parameter and a rate delta parameter;
the adjustment object parameter is the information indicative of the signal to be adjusted, and the rate delta parameter is the information about adjustment delta of the rate.

9. The MG according to claim 8, wherein:
the information indicative of the signal to be adjusted carries at least a signal identifier, or a signal list identifier, or a media resource identifier, or any combination thereof.

10. The MG according to any of claims 6-9, wherein:
the information about the adjustment delta of the rate is a percent by which the target rate is higher or lower than a current execution rate of the signal; or
the information about the adjustment delta of the rate is an absolute value by which the target rate is higher or lower than the current execution rate of the signal.

11. A Media Gateway Controller (MGC), comprising:
a sending unit, configured to send information indicative of a signal to be adjusted and information about an adjustment delta of a rate to a Media Gateway (MG), wherein the MG calculates a target rate according to a current execution rate of the signal to be adjusted and the information about the adjustment delta of the rate, and executes the signal to be adjusted at the target rate.

12. The MGC according to claim 11, wherein:
the sending unit is a first sending unit, which is configured to send a signal to the MG, wherein the signal carries a rate delta parameter;
the signal is the information indicative of the signal to be adjusted, and the rate delta parameter is the information about adjustment delta of the rate.

13. The MGC according to claim 11, wherein:
the sending unit is a second sending unit, which is configured to send a rate adjustment signal to the MG, wherein the rate adjustment signal carries an adjustment object parameter and a rate delta parameter;
the adjustment object parameter is the information indicative of the signal to be adjusted, and the rate delta parameter is the information about adjustment delta of the rate.

14. The MGC according to claim 13, wherein:
the information indicative of the signal to be adjusted carries at least a signal identifier, or a signal list identifier, or a media resource identifier, or any combination thereof.

15. The MGC according to any one of claims 11-14, wherein:
the information about the adjustment delta of the rate is a percent by which the target rate is higher or lower than the current execution rate of the signal; or
the information about the adjustment delta of the rate is an absolute value by which the target rate is higher or lower than the current execution rate of the signal.
